# EUROPÄISCHE PATENTSCHRIFT

(11) **EP 1 065 173 B1**
(45) Veröffentlichungstag und Bekanntmachung des Hinweises auf die Patenterteilung: **07.09.2005**
(21) Anmeldenummer: 00113205.9
(22) Anmeldetag: 21.06.2000
(51) Int. Cl.: C02F 3/12, B01J 8/18, B01J 8/20, B01J 8/22, B01J 8/44, F16K 15/14

(54) **Behälter mit einem von unten durchströmbaren, Rückschlagklappen aufweisenden Lochboden**
Container having a perforated bottom with check valves and upwards flow
Récipient avec un fond perforé contenant des clapets, le liquide s'écoulant de bas en haut

(30) Priorität: 29.06.1999 DE 19929789
(43) Veröffentlichungstag der Anmeldung: 03.01.2001
(73) Patentinhaber: Fischtechnik Fredelsloh GmbH, 37186 Moringen (DE)
(72) Erfinder: Meylahn, Gerd-Uwe, 14476 Gross Glienicke (DE)
(74) Vertreter: Rehberg Hüppe + Partner

(56) Entgegenhaltungen:
- FR-A- 2 585 972
- GB-A- 2 296 309
- US-A- 5 676 823
- US-A- 5 727 593

## Beschreibung

Die Erfindung bezieht sich auf einen Behälter mit einem Lochboden nach dem Oberbegriff des Anspruchs 1.

Konkreter bezieht sich die Erfindung auf eben solche Behälter, wie sie in der Abwassertechnik eingesetzt werden. Dabei ist in dem Behälter oberhalb des Lochbodens typischerweise ein Gemisch aus Feststoffpartikeln und Wasser angeordnet, das von unten durch den Lochboden mit Wasser durchströmt wird. Es ist auch möglich, zusätzlich oder statt des Wassers Preßluft von unterhalb des Lochbodens zuzuführen. Die oberhalb des Lochbodens erfolgenden Reaktionen können höchst unterschiedlich sein. Es ist möglich, das Gemisch durch Aufstromsortierung oder Flotation in seine einzelnen Bestandteile aufzuspalten. Für die Erfindung von besonderem Interesse sind jedoch solche Anwendungsfälle, in denen sich oberhalb des Lochbodens ein Granulat befindet, an dessen Teilchenoberflächen sich Bakterien anlagern, welche bestimmte Inhaltsstoffe aus dem sie umgebenden Abwasser, das durch den Lochboden von unten zugeführt wird, umwandeln. Dabei wächst Biomasse auf den Teilchenoberflächen des Granulats auf. Diese Biomasse wird typischerweise in regelmäßigen Abständen von den Teilchenoberflächen entfernt. Bei dem Granulat kann es sich um Sand handeln. In der Denitrifikation von Abwasser, beispielsweise bei der Aufbereitung von Wasser in Fischzuchtanlagen kommt bevorzugt ein Granulat zur Anwendung, das einen Teilchendurchmesser von ca. 2,5 mm und eine gegenüber Wasser leicht erhöhte Dichte aufweist. In jedem Fall wird das oberhalb des Lochbodens befindliche Granulat durch das durch den Lochboden hindurchströmende Abwasser fluidisiert. Das heißt, das zunächst als Festbett vorliegende Granulat wird von dem durchströmenden Abwasser angehoben, wodurch ein Wirbelbett entsteht. In dem Wirbelbett werden typischerweise die Granulatteilchen besonders weit nach oben angehoben, auf denen bereits relativ viel Biomasse aufgewachsen ist, weil diese Granulatteilchen einen besonders hohen Strömungswiderstand gegenüber dem von unten nach oben durch den Behälter strömenden Abwasser aufweisen. Beim Anfahren eines solchen Bioreaktors, d. h. beim Überführen des Festbetts in das Wirbelbett treten zum Teil erhebliche Widerstände auf, die hohe Pumpenleistungen oder den Einsatz zusätzlicher Mittel, wie beispielsweise Preßluft erfordern, um das gewünschte Wirbelbett zu erreichen. Nachdem das Wirbelbett vorliegt, muß normalerweise eine bestimmte Strömungsgeschwindigkeit des Abwassers eingehalten werden, damit das Wirbelbett aufrecht erhalten bleibt.

Ein Behälter mit einem Lochboden, wobei in dem Lochboden vorgesehene Löcher von unten durchströmbar und mit Rückschlagklappen versehen sind, ist aus der DE 41 18 020 A1 bekannt. Hierbei handelt es sich um den Teil einer Vorrichtung zur Aufstromsortierung, mit der spezifisch leichtere Bestandteile aus einer Abwassersuspension nach oben hin aussortiert werden sollen. Dabei sind die Löcher in dem Lochboden mit Rückschlagklappen versehen, die verhindern, daß Teile der Suspension nach unten durch den Lochboden hindurchtreten. Ein spezieller Aufbau der Rückschlagklappen ist in der DE 41 18 020 nicht beschrieben.

Ein Behälter nach dem Oberbegriff des Anspruchs 1 ist aus Patent Abstracts of Japan, C-427, June 12, 1987 Vol. 11/No. 184, betreffend die JP 62-7437 A2 bekannt. Hier schlagen die Rückschlagklappen an zusätzlichen Abdeckkappen für die Löcher in dem Lochboden an. Zum einen ist dadurch ein größerer konstruktiver Aufwand gegeben. Zum anderen weist die Strömungsrichtung des oberhalb des Lochbodens zwischen den Rückschlagklappen und den Abdeckkappen austretenden Fluidums eine ausgeprägte seitliche Komponente auf, so daß der Fluiddruck nicht vollständig zur Fluidisierung der Behälterfüllung über dem Lochboden zur Verfügung steht.

Der Erfindung liegt die Aufgabe zugrunde, einen Behälter nach dem Oberbegriff des Anspruchs 1 aufzuzeigen, bei dem die Rückschlagklappen besonders einfach ausgebildet sind und der in Verbindung mit der Anordnung von Granulat oberhalb des Lochbodens verwendbar ist.

Erfindungsgemäß wird diese Aufgabe durch die Merkmale des Anspruchs 1 gelöst.

Als bewegliche Teile der Rückschlagklappen sind bei dem neuen Behälter also streifenförmige Abschnitte aus Elastomerwerkstoff vorgesehen. Diese Abschnitte aus Elastomerwerkstoff werden in einem Bereich dauerhaft flach an den Lochboden angedrückt. In einem angrenzenden freien Bereich werden die streifenförmigen Abschnitte nach oben umgebogen, wobei sie bei nicht durchströmtem Lochboden die unter ihnen liegenden Löcher abdichtend flächig an vertikalen Gegendichtflächen anliegen. Hieraus ergibt sich zunächst ein konstruktiv sehr einfacher Aufbau der Rückschlagklappen. Damit ist es möglich, mit vertretbarem Aufwand Lochböden mit einer Vielzahl von Löchern mit Rückschlagklappen auszurüsten. Gleichzeitig macht sich ein besonderer Vorteil der Ausbildung der Rückschlagklappen des neuen Behälters bemerkbar. Die Rückschlagklappen mit den streifenförmigen Abschnitten aus Elastomerwerkstoff öffnen sich je nach der sie von unten durchströmenden Menge beispielsweise an Abwasser unterschiedlich weit. Das heißt, bei geringer Durchströmung öffnen sie sich nur ein wenig, während sie sich bei großer Durchströmung weiter öffnen. Hierdurch kommt ihnen gerade bei geringeren Durchströmungsmengen eine Düsenfunktion zu, die das Ausbilden eines Wirbelbetts aus oberhalb des Lochboden angeordnetem Granulat stark vereinfacht. Ganz konkret reduziert sich der Anfahrwiderstand beim anfänglichen Fluidisieren des Granulats ganz erheblich. So kann auf zusätzliche Maßnahmen zum Fluidisieren des Granulats ganz verzichtet werden. Hiermit wiederum wird es möglich, sehr großflächige Lochböden und damit auch sehr große Behälter als Bioreaktoren auszubilden. In diesem Zusammenhang machen sich zwei weitere Vorteile der Rückschlagklappen des neuen Behälters bemerkbar. Zum einen erlaubt ihre Düsenwirkung einen vergrößerten Bereich von Durchströmgeschwindigkeiten, ohne daß die Aufrechterhaltung des Wirbelbetts aus dem Granulat gefährdet wird. Konkret können auch geringe Durchsatzmengen toleriert werden, ohne daß das Wirbelbett zusammenbricht. Andererseits sorgen die Rückschlagklappen durch die effektiv ihrer Durchströmung entgegengerichteten elastischen Kontaktkräfte der streifenförmigen Abschnitte für eine gleichmäßige Verteilung des Drucks auf der Unterseite des Lochbodens und damit für eine über die gesamte Fläche des Lochbodens gleichmäßige Fluidisierung des Granulats auf der Oberseite des Lochbodens.

Die Gegendichtfläche für den nach oben umgebogenen Bereich mindestens eines streifenförmigen Abschnitts aus Elastomerwerkstoff kann von einem nach oben umgebogenen Bereich eines weiteren streifenförmigen Abschnitts aus Elastomerwerkstoff ausgebildet werden. Dann liegen die beiden umgebogenen Bereiche lippenförmig aneinander. Es ist aber auch möglich, die Gegendichtfläche an einem starren Winkelprofilabschnitt vorzusehen. Dies bietet sich insbesondere im Randbereich eines Lochbodens an. Bei einem starren Winkelprofil für die Gegendichtfläche kann vorgesehen sein, daß der streifenförmige Abschnitt etwas weniger stark umgebogen wird, um insgesamt keinen größeren Durchströmungswiderstand für die jeweilige Rückschlagklappe zu erzielen als bei zwei lippenförmig aneinanderliegenden umgebogenen Bereichen von zwei benachbarten streifenförmigen Abschnitten aus Elastomerwerkstoff.

Bevorzugt ist es, wenn jeder streifenförmige Abschnitt aus Elastomerwerkstoff der Länge nach in drei Bereiche unterteilt ist, wobei die beiden äußeren Bereiche nach oben umgebogen sind. Das heißt, jeder streifenförmige Abschnitt ist dann zweiseitig benachbarten Rückschlagklappen zugeordnet. Wenn gleichzeitig für jede Rückschlagklappe zwei streifenförmige Abschnitte vorgesehen werden, wird der gesamte Lochboden im Bereich seiner Löcher von den streifenförmigen Abschnitten aus Elastomerwerkstoff abgedeckt.

Die Überdeckung des Lochbodens von den streifenförmigen Abschnitten aus Elastomerwerkstoff ist vollständig, wenn sich diese ihrer Länge nach auch über die gesamte Breite des Lochbodens erstrecken. Auf diese Weise wird auch verhindert, daß in den Endbereichen der streifenförmigen Abschnitte Undichtigkeiten der Rückschlagklappen entstehen. Es ist aber auch möglich, einzelne streifenförmige Abschnitte aus Elastomerwerkstoff auf Stoß aneinander zu setzen.

Bei dem neuen Behälter sind die Löcher in dem Lochboden vorzugsweise als Langlöcher vorgesehen, wobei unter dem umgebogenen Bereich mindestens eines streifenförmigen Abschnitts aus Elastomerwerkstoff eine geradlinige Reihe von Langlöchern angeordnet ist. Die Langlöcher sorgen im Gegensatz zu durchgehenden Schlitzen für eine bessere Stabilität des Lochbodens. Der Durchströmungswiderstand ist im Gegensatz zu Einzellöchern jedoch deutlich geringer.

Besonders bewährt haben sich bei dem neuen Behälter streifenförmige Abschnitte aus Elastomerwerkstoff mit mindestens einer textilen Verstärkungseinlage. Besonders bevorzugt sind Gummiplatten mit zwei parallelen textilen Verstärkungseinlagen.

Zur Befestigung der streifenförmigen Abschnitte aus Elastomerwerkstoff können Flachprofilabschnitte vorgesehen sein, die unter Zwischenordnung des einen Bereichs der streifenförmigen Abschnitte aus Elastomerwerkstoff an den Lochboden angeschraubt werden.

Bei der konkreten Dimensionierung der streifenförmigen Abschnitte aus Elastomerwerkstoff sollte darauf geachtet werden, daß sie mit ihren umgebogenen Bereichen bei nicht durchströmtem Lochboden jeweils über eine vertikale Höhe von mindestens 25 mm flächig an ihren vertikalen Gegendichtflächen anliegen.

Wie bereits angedeutet, ist der neue Behälter in seiner bevorzugten Ausführungsform oberhalb des Lochbodens mit den Rückschlagklappen mit einem Granulat befüllt, das eine höhere Dichte als Wasser aufweist.

Um von diesem Granulat auf gewachsene Biomasse mit geringem apparativen Aufwand zu entfernen, kann oberhalb des Lochbodens mit den Rückschlagklappen ein Rohr angeordnet sein, das vertikal ausgerichtet ist und beidseitig innerhalb des Behälters frei endet, wobei eine Einstrahldüse von oben in das Rohr gerichtet ist. Wenn durch die Einstrahldüse beispielsweise ein Wasserstrahl in das vertikal ausgerichtete Rohr gerichtet wird, reißt der Strahl Luft mit in das Rohr hinein und verwirbelt das Wasser in dem Rohr so stark, daß die Biomasse von dem Granulat durch auftretende Scherkräfte abgerissen wird. Gleichzeitig wird das Granulat durch die sich einstellende Abwärtsströmung in dem vertikalen Rohr aus dem oberen Bereich des Behälters in das Rohr nachgezogen, so daß insbesondere das Granulat, welches besonders dicke Aufwachsungen von Biomasse aufweist, dieser Reinigung unterzogen wird. Die abgelöste Biomasse kann zusammen mit dem den Behälter von unten nach oben durchströmenden Abwasser abgeführt werden. Für das Entfernen der Biomasse von dem Granulat in dem neuen Behälter ist so keine aktive mechanische Reinigungseinrichtung notwendig. Auch die vorhandenen passiven Reinigungseinrichtungen sind mit geringem apparativen Aufwand realisierbar.

Die Erfindung wird im folgenden anhand eines Ausführungsbeispiels näher erläutert und beschrieben, dabei zeigt
- Fig. 1: einen schematisierten Vertikalschnitt durch einen neuen Behälter,
- Fig. 2: einen Lochboden des Behälters gemäß Figur 1 in der Ansicht von oben,
- Fig. 3: den Lochboden gemäß Fig. 2 mit Rückschlagklappen in einem Querschnitt und
- Fig. 4: ein vergrößertes Detail des Lochbodens gemäß Fig. 3.

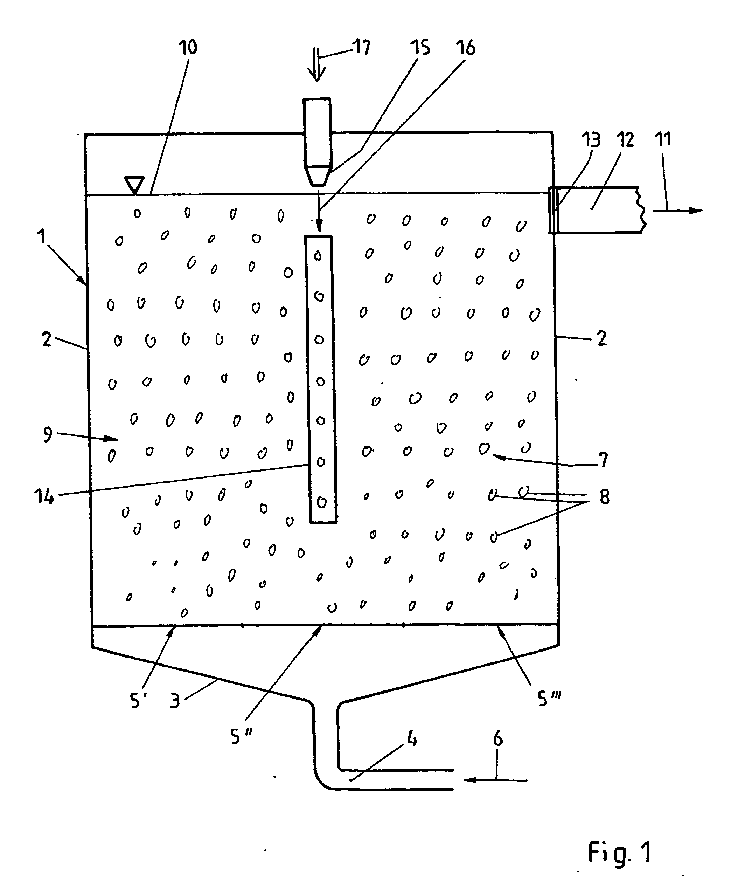

Der in Fig. 1 dargestellte Behälter 1 weist einen aus der zeichnerischen Darstellung nicht hervorgehenden rechteckigen Querschnitt auf, der durch seitliche Wandungen 2 begrenzt wird. Unten wird der Behälter 1 durch einen Zulauftrichter 3 begrenzt, an dessen tiefsten Punkt eine Zulaufleitung 4 einmündet. Oberhalb des Zulauftrichters 3 ist ein Lochboden 5 angeordnet, der sich über die gesamte Querschnittsfläche des Behälters 2 erstreckt und aus drei Einzelsegmenten 5', 5", 5''' zusammengesetzt ist. Der Lochboden 5 wird von unten her von Abwasser 6 durchströmt, welches über die Zulaufleitung 4 zugeführt wird. Oberhalb des Lochbodens 5 fluidisiert das Abwasser 6 ein Granulat 7 aus einer Vielzahl von Granulatteilchen 8 zu einem Wirbelbett 9. Das Wirbelbett 9 erstreckt sich bis zu einem Wasserstand 10 in dem Behälter 1. Die Granulatteilchen 8 weisen jeweils einen Durchmesser von etwa 2,5 mm auf und besitzen eine auf das Abwasser 6 bezogene relative Dichte von 1,4. An den Teilchenoberflächen der Granulatteilchen 8 lagern sich Bakterien an, die in dem Abwasser 6 enthaltene biologische Verunreinigungen durch Umwandlung in Biomasse abbauen. Diese Biomasse wächst auf den Teilchenoberflächen der Granulatteilchen 8 auf, wodurch sich der Durchmesser und damit der Strömungswiderstand der Granulatteilchen 8 vergrößert. In der Folge finden sich Granulatteilchen 8 mit besonders viel aufgewachsener Biomasse im wesentlichen im oberen Bereich des Behälters 1. Aus dem oberen Bereich des Behälters 1 fließt das behandelte Abwasser 11 über einen Ablauf 12 ab. Dem Ablauf 12 ist hier ein einfaches Sieb 13 vorgeschaltet, das das Eintreten von Granulatteilchen 8 in den Ablauf 12 verhindert. Vorzugsweise ist statt des Siebs 13 eine nach dem Sedimentationsprinzip arbeitende Granulatfalle vorgesehen, mit der die bei einem Sieb gegebene Gefahr einer Verstopfung beispielsweise durch aufwachsende Biomasse entfällt. In dem Behälter 1 ist weiterhin ein vertikal ausgerichtetes Rohr 14 angeordnet, dessen oberes freies Ende sich etwas unterhalb des Wasserstands 10 befindet und dessen unteres freies Ende mit Abstand oberhalb des Lochbodens 5 angeordnet ist. In das obere freie Ende des Rohr 14 hinein ist eine Einstrahldüse 15 gerichtet, mit der ein Strahl 16 beispielsweise aus Brauchwasser 17 in das Rohr 14 hinein gerichtet werden kann. Dieser Strahl 16 reißt Luft und Granulatteilchen 8 mit in das Rohr 14 hinein, wobei es zu einer starken Verwirbelung kommt. Die in der Folge auftretenden Scherkräfte lösen die aufgewachsene Biomasse von den Granulatteilchen 8 ab. Auf diese Weise kann in regelmäßigen Abständen eine Reinigung der Granulatteilchen 8 erfolgen. Hiervon werden nicht nur die Granulatteilchen 8 ganz oben in dem Behälter 1 erfaßt. Durch die Durchströmung des Rohrs 14 nach Art eines Injektorrohrs entsteht eine von unten nach oben gerichtete Rückströmung in dem Behälter, die auch Granulatteilchen 8 aus dem mittleren bis unteren Bereich des Behälters 1 der Reinigung zuführt.

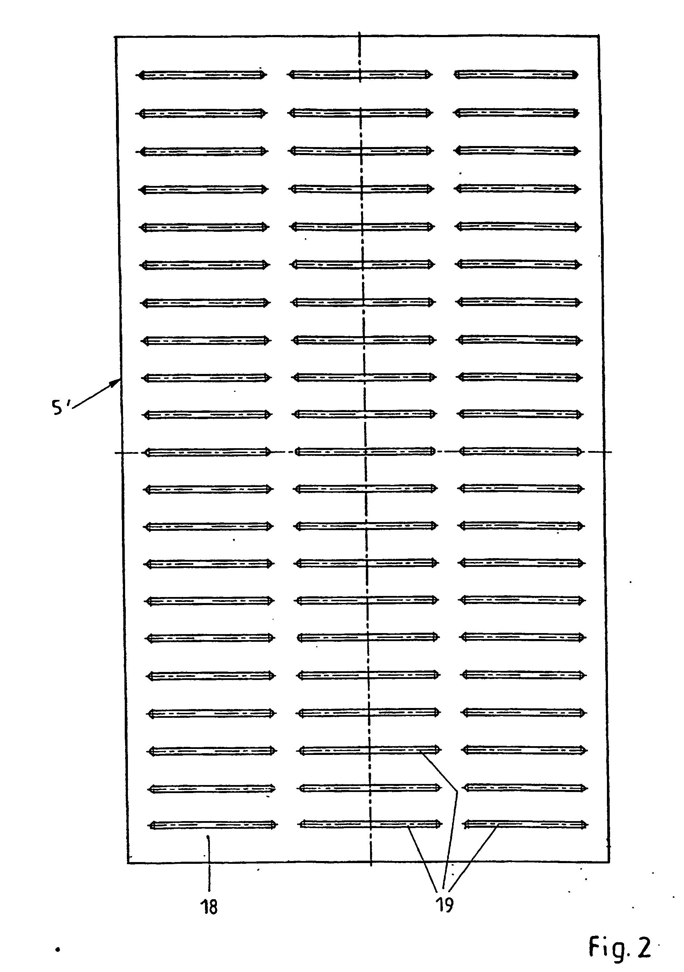

Ohne Durchströmung des Lochbodens 5 von unten liegt das Granulat 7 als Festbett vor, wobei die einzelnen Granulatteilchen 8 direkt aneinander anliegen. Erst durch die Durchströmung wird das Wirbelbett 9 ausgebildet. Um zu verhindern, das Teile des Festbetts durch den Lochboden 5 hindurch in den Zulauftrichter 3 herabfallen und um das Überführen des Festbetts aus den Granulatteilchen 8 in das mit dem Wirbelbett 9 fluidisierte Granulat zu erleichtern, ist der Lochboden 5 in ganz spezieller Weise ausgebildet, was im Zusammenhang mit den folgenden Figuren 2 bis 4 näher erläutert werden wird.

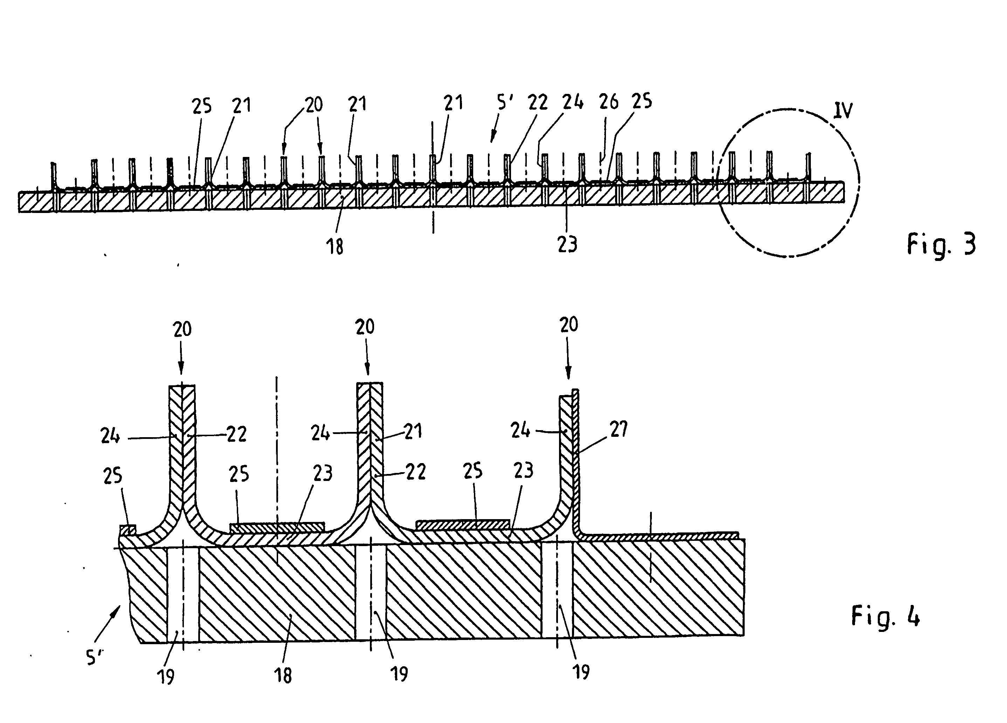

Fig. 2 zeigt ein Teilsegment 5' des Lochbodens 5 von oben. Das Teilsegment 5*'* ist aus einer Platte 18 mit rechteckigen Abmessungen ausgebildet. In der Platte 18 sind Langlöcher 19 in parallel nebeneinander angeordneten Reihen vorgesehen. Dabei zeigt Fig. 2 das Teilsegment 5' des Lochbodens 5 von unten, so daß Rückschlagklappen für die Langlöcher 19 noch nicht sichtbar sind. Diese Rückschlagklappen 20 gehen jedoch aus den Fig. 3 und 4 in Ihrem Aufbau deutlich hervor, die einen Querschnitt durch das Teilsegment 5' des Lochbodens 5 zeigen. Wesentlicher Bestandteil der Rückschlagklappen 20 sind streifenförmige Abschnitte 21 aus Elastomerwerkstoff. Konkret handelt es sich um Gummiplatten mit zweifacher Textileinlage. Die streifenförmigen Abschnitte 21 aus Elastomerwerkstoff erstrecken sich über die gesamte Breite des Teilsegments 5*'* und weisen jeweils 3 in dieser Haupterstreckungsrichtung zueinander parallel verlaufenden Bereiche 22, 23 und 24 auf. Der mittlere Bereich 23 wird durch einen starren Flachprofilabschnitt 25 an die Platte 18 angedrückt, wobei der Flachprofilabschnitt 25 durch Schrauben 26, die durch den Bereich 23 hindurchgreifen, an die Platte 18 angeschraubt ist. Von dem derart horizontal ausgerichteten Bereich 23 sind die Bereiche 22 und 24 nach oben umgebogen und enden frei vertikal auslaufend. Dabei liegen im mittleren Bereich des Teilsegments 5' jeweils Bereiche 22 und 24 flächig aneinander an. Im Randbereich des Teilsegments 5', wie er in Figur 4 rechts dargestellt, bildet ein starrer Winkelprofilabschnitt 27 die Gegendichtfläche für den letzten Bereich 24 des angrenzenden streifenförmigen Abschnitts 21 aus Elastomerwerkstoff. Die so über den Langlöchern 19 ausgebildeten Rückschlagklappen 20 lassen mit beginnender Durchströmung des Lochbodens 5 von unten zunächst nur über eine kleine Querschnittsfläche Abwasser hindurchtreten. Hierdurch wird ein Abwasserstrahl ausgebildet, dem es aufgrund seiner vergleichsweise hohen Strömungsgeschwindigkeit gelingt, zumindest in einem Teilbereich des Behälters 1 das Granulat 7 gemäß Figur 1 zu fluidisieren. Mit zunehmender Durchströmung verbreitert sich der freie Querschnitt der jeweiligen Rückschlagklappe 20. Die Strömungsgeschwindigkeit des Abwassers durch die Rückschlagklappe 20 nimmt damit nur in begrenztem Maße zu. Insgesamt ergibt sich durch die variable freie Querschnittsfläche der Rückschlagklappen 20 die Möglichkeit, den Behälter 1 gemäß Fig. 1 mit sehr unterschiedlichen Durchsatzmengen am Abwasser 6 zu fahren, ohne daß das Wirbelbett 9 zusammenbricht oder das lokal zu hohe Strömungsgeschwindigkeiten in dem Behälter 1 auftreten. In jedem Falls verhindern die Rückschlagklappen 20 zuverlässig, daß das Granulat 7 durch die Langlöcher 19 hindurch in den Zulauftrichter 8 herabfällt. Um alle Rückschlagklappen 20 mit etwa gleichmäßigen Öffnungskräften zu versehen, ist der Bereich 24 im Bereich der ganz rechten Rückschlagklappe 20 in Fig. 4, die zur einen Hälfte aus den starren Winkelprofilabschnitt 27 besteht, weniger stark umgebogen als die umgebogenen Bereich 22 und 24 der anderen Rückschlagklappen 20. Auf diese Weise wird ausgeglichen, daß sich der starre Winkelprofilabschnitt 27 zum Öffnen der zugehörigen Rückschlagklappe 20 nicht verformen kann und die gesamte Verformung durch den anliegenden Bereich 24 des streifenförmigen Abschnitts 21 aus Elastomerwerkstoff erfolgen muß.

### BEZUGSZEICHENLISTE

- 1 -: Behälter
- 2 -: Wandung
- 3 -: Zulauftrichter
- 4 -: Zulaufleitung
- 5 -: Lochboden
- 6 -: Abwasser
- 7 -: Granulat
- 8 -: Granulatteilchen
- 9 -: Wirbelbett
- 10 -: Wasserstand

- 11 -: behandeltes Abwasser
- 12 -: Ablauf
- 13 -: Sieb
- 14 -: Rohr
- 15 -: Einstrahldüse
- 16 -: Strahl
- 17 -: Brauchwasser
- 18 -: Platte
- 19 -: Langloch
- 20 -: Rückschlagklappe

- 21 -: streifenförmiger Abschnitt aus Elastomerwerkstoff
- 22 -: Bereich
- 23 -: Bereich
- 24 -: Bereich
- 25 -: Flachprofilabschnitt
- 26 -: Schraube
- 27 -: Winkelprofilabschnitt

## Patentansprüche

1. Behälter mit einem Lochboden, der von unten durchströmbare Löcher aufweist, die mit Rückschlagklappen versehen sind, bei denen ein Abschnitt vorgesehen ist, der bei nicht durchströmtem Lochboden mit elastischer Kontaktkraft flächig an einer Gegendichtfläche anliegt, **dadurch gekennzeichnet, daß** mindestens eine der Rückschlagklappen (20) einen streifenförmigen Abschnitt (21) aus Elastomerwerkstoff besitzt, der der Länge nach in mindestens zwei Bereiche (23, 22/24) unterteilt ist, wobei der eine Bereich (23) flach an den Lochboden (5) angedrückt ist und der andere Bereich (22/24) frei endend vertikal nach oben umgebogen ist.

2. Behälter nach Anspruch 1, **dadurch gekennzeichnet, daß** die Gegendichtfläche von einem nach oben umgebogenen Bereich (24/22) eines weiteren streifenförmigen Abschnitts (21) aus Elastomerwerkstoff ausgebildet wird.

3. Behälter nach Anspruch 1 oder 2, **dadurch gekennzeichnet, daß** mindestens ein streifenförmiger Abschnitt (21) aus Elastomerwerkstoff der Länge nach in drei Bereiche (22 bis 24) unterteilt ist, wobei die beiden äußeren Bereiche (22 und 24) nach oben umgebogen sind.

4. Behälter nach einem der Ansprüche 1 bis 3, **dadurch gekennzeichnet, daß** sich mindestens ein streifenförmiger Abschnitt (21) aus Elastomerwerkstoff über die gesamte Breite des Lochbodens (5) erstreckt.

5. Behälter nach einem der Ansprüche 1 bis 4, **dadurch gekennzeichnet, daß** unter dem umgebogenen Bereich (22/24) mindestens eines streifenförmigen Abschnitt (21) aus Elastomerwerkstoff eine geradlinige Reihe von Langlöchern (19) angeordnet ist.

6. Behälter nach einem der Ansprüche 1 bis 5, **dadurch gekennzeichnet, daß** mindesten ein streifenförmiger Abschnitt (21) aus Elastomerwerkstoff mindestens eine textile Verstärkungseinlage aufweist.

7. Behälter nach einem der Ansprüche 1 bis 6, **dadurch gekennzeichnet, daß** mindesten ein streifenförmiger Abschnitt (21) aus Elastomerwerkstoff mit einem an den Lochboden (5) angeschraubten starren Flachprofilabschnitt (25) in seinem einen Bereich (23) flach an den Lochboden angedrückt ist, wobei Schrauben (26) den Bereich (23) durchsetzen.

8. Behälter nach einem der Ansprüche 1 bis 7, **dadurch gekennzeichnet, daß** mindesten ein streifenförmiger Abschnitt (21) aus Elastomerwerkstoff mit seinem anderen Bereich (22/24) bei nicht durchströmtem Lochboden (5) über eine vertikale Höhe von mindestens 25 mm flächig an seiner vertikalen Gegendichtfläche anliegt.

9. Behälter nach einem der Ansprüche 1 bis 8, **dadurch gekennzeichnet, daß** oberhalb des Lochbodens (5) mit den Rückschlagklappen (20) ein Granulat (7) mit einer höheren Dichte als Wasser angeordnet ist.

10. Behälter nach einem der Ansprüche 1 bis 9, **dadurch gekennzeichnet, daß** oberhalb des Lochbodens (5) mit den Rückschlagklappen ein Rohr (14) angeordnet ist, das vertikal ausgerichtet ist und beidseitig innerhalb des Behälters frei endet, wobei eine Einstrahldüse (15) von oben in das Rohr (14) gerichtet ist.

## Claims

1. Container having a perforated base comprising holes through which a flow may be passed from below, the holes being provided with back-flow preventing flaps which comprise a section flatly abutting against a counter sealing face with an elastic contact force when no flow is passed through the perforated base, **characterized in that** at least one of the back-flow preventing flaps (20) comprises a stripe-shaped piece of elastomeric material which, along its length, is divided into at least two areas (23, 22/24), one (23) of the areas being pressed flat against the perforated base (5), and the other (22/24) of the areas being bent into a vertical upward direction and ending free.

2. Container according to claim 1, **characterized in that** the counter sealing face is provided by an area (24/22) of a further stripe-shaped piece (21) of elastomeric material, which is bent into an upward direction.

3. Container according to claim 1 or 2, **characterized in that** at least one stripe-shaped piece (21) of elastomeric material is, along its length, divided in three areas (22 to 24), both outer areas (22 and 24) being bent into an upward direction.

4. Container according to any of the claims 1 to 3, **characterized in that** at least one stripe-shaped piece (21) of elastomeric material extends over the whole width of the perforated base (5).

5. Container according to any of the claims 1 to 4, **characterized in that** a straight line of elongated holes (19) is arranged beneath the bent area (22/24) of at least one stripe-shaped piece (21) of elastomeric material.

6. Container according to any of the claims 1 to 5, **characterized in that** at least one stripe-shaped piece (21) of elastomeric material comprises at least one reinforcing insert made of fabric.

7. Container according to any of the claims 1 to 6, **characterized in that** at least one stripe-shaped piece (21) of elastomeric material is pressed flat against the perforated base within its one area (23) by a length of a rigid flat profile (25) screwed to the perforated base (5), screws (26) extending through the area (23).

8. Container according to any of the claims 1 to 7, **characterized in that** at least one stripe-shaped piece (21) of elastomeric material flatly abuts against its vertical counter sealing face via its other area (22/24) over a vertical height of at least 25 mm, when no flow is passed through the perforated base (5).

9. Container according to any of the claims 1 to 8, **characterized in that** granulates (7) having a higher density than water are arranged above the perforated base (5) having the back-flow preventing flaps (20).

10. Container according to any of the claims 1 to 9, **characterized in that** a pipe (14) is arranged above the perforated base (5), the pipe being vertically oriented and freely ending within the container at both ends, an injection nozzle (15) being directed into the pipe (14) from above.

## Revendications

1. Récipient avec un fond perforé qui présente des trous pouvant être traversés par un courant depuis le bas, lesquels sont pourvus de clapets de non-retour pour lesquels il est prévu une partie qui, lorsque le fond perforé n'est pas traversé par un courant, s'applique à plat, avec une force de contact élastique, contre une contre-surface d'étanchéité, **caractérisé en ce qu'**au moins l'un des clapets de non-retour (20) possède une partie (21) en forme de bande en matériau élastomère qui est divisée dans le sens de la longueur en au moins deux zones (23, 22/24), une zone (23) étant pressée à plat contre le fond perforé (5) et l'autre zone (22/24) étant repliée verticalement vers le haut et se terminant librement.

2. Récipient selon la revendication 1, **caractérisé en ce que** la contre-surface d'étanchéité est formée par une zone (24/22) repliée vers le haut d'une autre partie (21) en forme de bande en un matériau élastomère.

3. Récipient selon la revendication 1 ou 2, **caractérisé en ce qu'**au moins une partie (21) en forme de bande en matériau élastomère est divisée dans le sens de la longueur entre trois zones (22 à 24), les deux zones extérieures (22) et (24) étant repliées vers le haut.

4. Récipient selon l'une des revendications 1 à 3, **caractérisé en ce qu'**au moins une partie (21) en forme de bande en matériau élastomère s'étend sur toute la largeur du fond perforé (5).

5. Récipient selon l'une des revendications 1 à 4, **caractérisé en ce que** sous la zone recourbée (22/24) d'au moins une partie en forme de bande en matériau élastomère est disposée une série rectiligne de trous oblongs (19).

6. Récipient selon l'une des revendications 1 à 5, **caractérisé en ce qu'**au moins une partie (21) en forme de bande en matériau élastomère présente au moins une garniture de renfort textile.

7. Récipient selon l'une des revendications 1 à 6, **caractérisé en ce qu'**au moins une partie (21) en forme de bande en matériau élastomère avec une partie profilée plate (25) rigide vissée sur le fond perforé (5), est pressée dans l'une de ses zones (23), à plat contre le fond perforé, tandis que des vis (26) traversent la zone (23).

8. Récipient selon l'une des revendications 1 à 7, **caractérisé en ce qu'**au moins une partie (21) en forme de bande en matériau élastomère s'applique, par son autre zone (22/24), lorsque le fond perforé (5) n'est pas traversé par un courant, à plat contre sa contre-surface d'étanchéité verticale, sur une hauteur verticale d'au moins 25 mm.

9. Récipient selon l'une des revendications 1 à 8, **caractérisé en ce qu'**au-dessus du fond perforé (5) avec les clapets de non-retour (20) est disposé un granulat (7) d'une densité supérieure à l'eau.

10. Récipient selon l'une des revendications 1 à 9, **caractérisé en ce qu'**au-dessus du fond perforé (5) avec les clapets de non-retour est disposé un tube (14) qui est orienté verticalement et qui se termine librement des deux côtés à l'intérieur du récipient, une buse à jet unique (15) étant dirigée depuis le haut dans le tube (14).
